(19) Europäisches Patentamt / European Patent Office / Office européen des brevets

(11) **EP 4 306 992 A1**

(12) **EUROPEAN PATENT APPLICATION**
published in accordance with Art. 153(4) EPC

(43) Date of publication:
**17.01.2024 Bulletin 2024/03**

(21) Application number: **22767128.6**

(22) Date of filing: **08.03.2022**

(51) International Patent Classification (IPC):
**G01S 7/481** (2006.01)  **G01S 7/497** (2006.01)
**G02B 26/10** (2006.01)

(52) Cooperative Patent Classification (CPC):
**G01S 7/481; G01S 7/497; G02B 26/10**

(86) International application number:
**PCT/JP2022/009948**

(87) International publication number:
**WO 2022/191174 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021 JP 2021038050**

(71) Applicants:
• **Pioneer Corporation
Tokyo 113-0021 (JP)**
• **Pioneer Smart Sensing Innovations Corporation
Tokyo 113-0021 (JP)**

(72) Inventor: **KASONO Osamu
Kawagoe-shi, Saitama 350-8555 (JP)**

(74) Representative: **Vossius & Partner
Patentanwälte Rechtsanwälte mbB
Siebertstrasse 3
81675 München (DE)**

(54) **SENSOR DEVICE**

(57) Four reflecting units (200) are located at four corners of a scanning range (SA): a first corner (CR1), a second corner (CR2), a third corner (CR3), and a fourth corner (CR4). Each reflecting unit (200) reflects at least a part of a spot (S). The measuring unit (310) measures positional deviation of a scanning unit (100) from a reference position using a relationship between a reflection amount A1 of the spot (S) reflected by the reflecting unit (200) provided at the first corner (CR1), a reflection amount A2 of the spot (S) reflected by the reflecting unit (200) provided at the second corner (CR2), a reflection amount A3 of the spot (S) reflected by the reflecting unit (200) provided at the third corner (CR3), and a reflection amount A4 of the spot (S) reflected by the reflecting unit (200) provided at the fourth corner (CR4).

FIG. 1

EP 4 306 992 A1

**Description**

TECHNICAL FIELD

The present invention relates to a sensor device.

BACKGROUND ART

In recent years, various sensor devices such as light detection and ranging (LiDAR) have been developed. The sensor device includes a scanning unit such as a micro electro mechanical systems (MEMS) mirror and a polygon mirror.
Patent Document 1 describes an example of the sensor device. In this sensor device, a scanning unit includes reflecting units provided at a scanning start position and a scanning end position. Further, positional deviation of a scanning range is measured by using a comparison result between a reflection amount of a beam reflected by the reflecting unit provided at the scanning start position and a reflection amount of a beam reflected by the reflecting unit provided at the scanning end position.

RELATED DOCUMENT

PATENT DOCUMENT

[Patent Document 1] Japanese Unexamined Patent Publication No. 2020-16481

SUMMARY OF THE INVENTION

TECHNICAL PROBLEM

For example, as described in Patent Document 1, the deviation of the scanning range may be measured by using the reflection amount of the beam reflected by the reflecting unit provided at the scanning start position of the scanning range of the scanning unit and the reflection amount of the beam reflected by the reflecting unit provided at the scanning end position of the scanning range of the scanning unit. However, using only two reflecting units may not be able to measure the rotational deviation of the scanning range. Further, when the scanning range is deviated by a relatively large distance, the beam may not be emitted to the reflecting unit provided at the scanning start position or the reflecting unit provided at the scanning end position.
An example of the problem to be solved by the present invention is to appropriately measure the positional deviation of a scanning range of the scanning unit from a reference position.

SOLUTION TO PROBLEM

According to the invention described in claim 1,
there is provided a sensor device including:

a scanning unit; and
a plurality of reflecting units configured to reflect at least a part of a beam emitted to a scanning range of the scanning unit,
in which the plurality of reflecting units are located at at least four corners of the scanning range.

According to the invention described in claim 2,
there is provided a sensor device including:

a scanning unit; and
a plurality of reflecting units configured to reflect at least a part of a beam emitted to a scanning range of the scanning unit,
in which the plurality of reflecting units are located on at least both sides of the scanning range, and
the plurality of reflecting units are configured to reflect at least a part of the beam different from the beam emitted to a scanning start position of the scanning range of the scanning unit and from the beam emitted to a scanning end position of the scanning range of the scanning unit.

BRIEF DESCRIPTION OF THE DRAWINGS

Fig. 1 is a perspective view of a sensor device according to an embodiment.
Fig. 2 is a diagram showing an example of a relationship between a scanning range of a scanning unit and a plurality of reflecting units.
Fig. 3 is a diagram illustrating a first example of positional deviation of the scanning unit from a reference position.
Fig. 4 is a diagram illustrating a second example of the positional deviation of the scanning unit from the reference position.
Fig. 5 is a diagram illustrating a third example of the positional deviation of the scanning unit from the reference position.
Fig. 6 is a diagram showing a first modification example of Fig. 2.
Fig. 7 is a diagram showing a second modification example of Fig. 2.
Fig. 8 is a diagram showing a third modification example of Fig. 2.
Fig. 9 is a diagram showing a fourth modification example of Fig. 2.
Fig. 10 is a diagram illustrating a hardware configuration of a measuring unit and a correcting unit.
Fig. 11 is a diagram illustrating a first example of a measuring system that measures the positional deviation of the scanning unit from the reference position.
Fig. 12 is a diagram illustrating a second example of the measuring system that measures the positional deviation of the scanning unit from the reference position.
Fig. 13 is a diagram illustrating a third example of the measuring system that measures the positional deviation of the scanning unit from the reference position.
Fig. 14 is a diagram illustrating a fourth example of the measuring system that measures the positional deviation of the scanning unit from the reference position.

DESCRIPTION OF EMBODIMENTS

Hereinafter, embodiments of the present invention will be described with reference to the drawings. In all the drawings, the same constituent elements are designated by the same reference numerals, and the description thereof will not be repeated as appropriate.

In the present specification, unless otherwise specified, ordinal numbers such as "first", "second", "third", and the like are added merely to distinguish configurations with similar names and do not imply specific characteristics of the configuration (for example, order or importance).

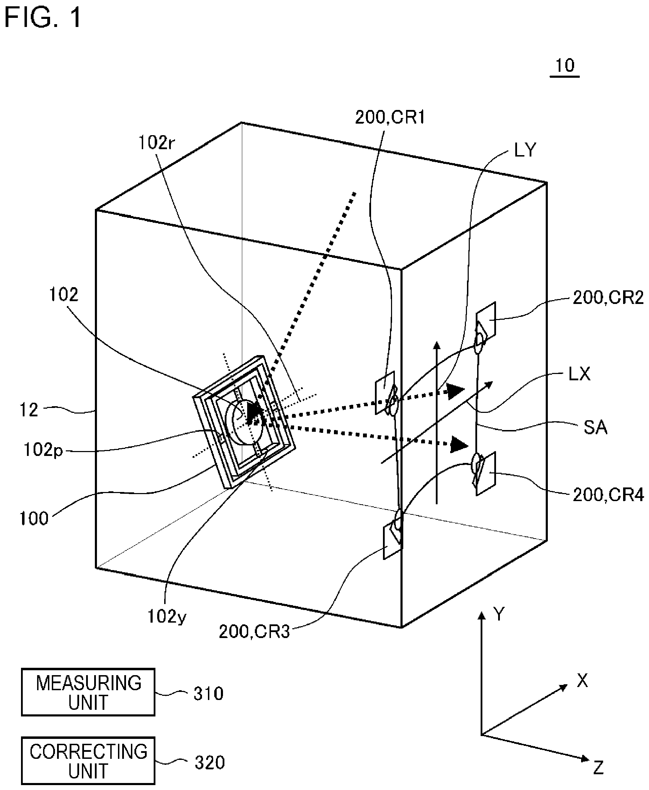

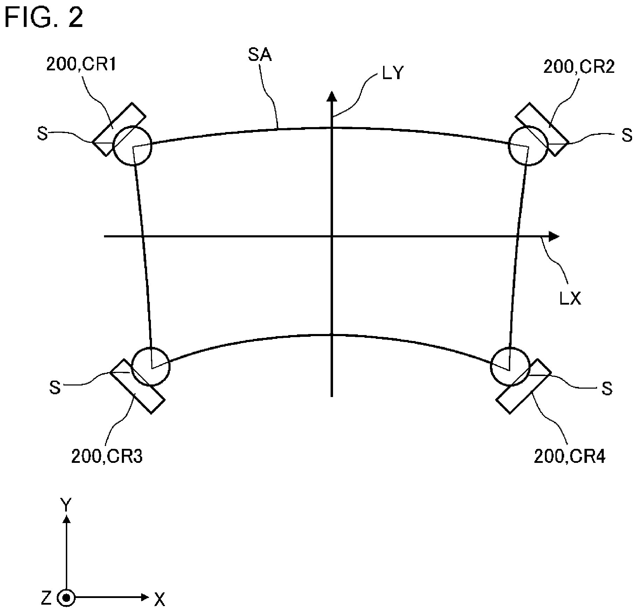

Fig. 1 is a perspective view of a sensor device 10 according to an embodiment. Fig. 2 is a diagram showing an example of a relationship between a scanning range SA of a scanning unit 100 and a plurality of reflecting units 200.

In Figs. 1 and 2, an arrow indicating a first direction X, a second direction Y, or a third direction Z indicates that a direction from a base to a tip of the arrow is a positive direction of a direction indicated by the arrow, and that a direction from the tip to the base of the arrow is a negative direction of the direction indicated by the arrow. A black-dotted white circle indicating the third direction Z indicates that a direction from the background to the foreground of the paper plane is a positive direction of the direction indicated by the black-dotted white circle, and that a direction from the foreground to the background of the paper plane is a negative direction of the direction indicated by the black-dotted white circle.

The first direction X is one direction parallel to a horizontal direction orthogonal to a vertical direction. When viewed from the positive direction of the third direction Z, the positive direction of the first direction X is a direction from left to right in the horizontal direction, and the negative direction of the first direction X is a direction from right to left in the horizontal direction. The second direction Y is a direction parallel to the vertical direction. The positive direction of the second direction Y is a direction from bottom to top in the vertical direction, and the negative direction of the second direction Y is a direction from top to bottom in the vertical direction. The third direction Z is one direction parallel to the horizontal direction and orthogonal to the first direction X. When viewed from the negative direction of the first direction X, the positive direction of the third direction Z is a direction from left to right in the horizontal direction, and the negative direction of the third direction Z is a direction from right to left in the horizontal direction.

The relationship between the first direction X, the second direction Y, the third direction Z, the horizontal direction, and the vertical direction is not limited to the relationship according to the present embodiment. The relationship between the first direction X, the second direction Y, the third direction Z, the horizontal direction, and the vertical direction varies depending on the disposition of the sensor device 10. For example, the third direction Z may be parallel to the vertical direction.

The sensor device 10 includes a housing 12, the scanning unit 100, the plurality of reflecting units 200, a measuring unit 310, and a correcting unit 320.

The scanning unit 100 is accommodated inside the housing 12. In the present embodiment, the scanning unit 100 is a two-axis MEMS mirror. The scanning unit 100 may be a scanning unit different from the two-axis MEMS mirror, such as a galvanometer mirror.

The scanning unit 100 scans a virtual plane perpendicular to the third direction Z with a beam in the first direction X and the second direction Y. Specifically, the scanning unit 100 has a reflecting surface 102 that reflects a beam emitted from a light source such as a laser (not shown). A dashed arrow extending toward the reflecting surface 102 in Fig. 1 indicates an optical axis of a beam emitted from the light source (not shown) and incident on the reflecting surface 102. Each of two dashed arrows extending from the reflecting surface 102 in Fig. 1 indicates an optical axis of a beam reflected by the reflecting surface 102. The two beams indicated by the two dashed arrows are reflected by the reflecting surface 102 at timings different from each other.

The reflecting surface 102 rotates around a yaw axis 102y and a pitch axis 102p that are orthogonal to each other. The yaw axis 102y and the pitch axis 102p are orthogonal to a roll axis 102r passing through a normal line at the center of the reflecting surface 102. In a case where the position of the scanning unit 100 is located at a reference position, the yaw axis 102y is tilted diagonally in the negative direction of the third direction Z with respect to the positive direction of the second direction Y. In addition, in a case where the position of the scanning unit 100 is located at a predetermined reference position, the pitch axis 102p is parallel to the first direction X. The scanning unit 100 rotates the reflecting surface 102 around the yaw axis 102y to scan the virtual plane perpendicular to the third direction Z with the beam incident on the reflecting surface 102 in the first direction X. In addition, the scanning unit 100 rotates the reflecting surface 102 around the pitch axis 102p to scan the virtual plane perpendicular to the third direction Z with the beam incident on the reflecting surface 102 in the second direction Y.

In the present embodiment, the reference position of the position of the scanning unit 100 refers to a position where the scanning unit 100 is provided in a case where the scanning unit 100 is disposed as designed. For example, in a case where the scanning unit 100 is assembled to the sensor device 10, the scanning unit 100 is provided at the reference position through a fixing unit such as an adhesive. However, in order to provide the scanning unit 100 at the reference position, relatively high-precision adjustment is required, which can incur relatively high cost. Further, even in a case where the scanning unit 100 is provided at the reference position through the fixing unit, the position of the scanning unit 100 may deviate from the reference position because of temporal changes in the fixing unit.

The scanning unit 100 scans the predetermined scanning range SA projected onto the virtual plane perpendicular to the third direction Z with beams. Specifically, the sensor device 10 generates point cloud data by detecting the beams, which are emitted toward the scanning range SA by the scanning unit 100 and are reflected or scattered by an object (not shown) present outside the housing 12, using a light detection element such as an avalanche photodiode (APD, not shown).

Figs.1 and 2 show the scanning range SA projected onto the virtual plane orthogonal to the third direction Z at a predetermined location such as a window of the housing 12, through which the beam emitted by the scanning unit 100 is transmitted. The scanning range SA is irradiated with the beam by the scanning unit 100. Hereinafter, a portion of the beam irradiated by the scanning unit 100, which is projected onto the same virtual plane as the virtual plane where the scanning range SA is projected, will be referred to as a spot, as necessary. The scanning range SA shown in Figs. 1 and 2 schematically shows a region occupied by a trajectory through which the center of the spot generated by the beam, with which scanning is performed by the scanning unit 100, passes and a portion of the trajectory adjacent to the second direction Y. Figs. 1 and 2 show four spots S located at four corners of the scanning range SA: a first corner CR1, a second corner CR2, a third corner CR3, and a fourth corner CR4, which will be described below.

In Figs. 1 and 2, a first virtual line LX and a second virtual line LY are shown in the scanning range SA for the explanatory purpose. The first virtual line LX is a virtual line that passes through the center of the scanning range SA in a case where the position of the scanning unit 100 is located at the reference position, and that is parallel to the first direction X. The second virtual line LY is a virtual line that passes through the center of the scanning range SA in a case where the position of the scanning unit 100 is located at the reference position, and that is parallel to the second direction Y.

In the present embodiment, the scanning range SA has four corners, that is, the first corner CR1, the second corner CR2, the third corner CR3, and the fourth corner CR4, and has a shape that approximates a fan-like shape. The shape of the scanning range SA is not limited to the shape that approximates a fan-like shape, and may be a shape other than a fan-like shape, for example, a quadrangle such as a rectangle and a square, or a shape that approximates a quadrangle. When viewed from the positive direction side of the third direction Z, the first corner CR1 is located on the negative direction side of the first direction X with respect to the second virtual line LY and on the positive direction side of the second direction Y with respect to the first virtual line LX. When viewed from the third direction Z, the second corner CR2 is located on the positive direction side of the first direction X with respect to the second virtual line LY and on the positive direction side of the second direction Y with respect to the first virtual line LX. When viewed from the third direction Z, the third corner CR3 is located on the negative direction side of the first direction X with respect to the second virtual line LY and on the negative direction side of the second direction Y with respect to the first virtual line LX. When viewed from the third direction Z, the fourth corner CR4 is located on the positive direction side of the first direction X with respect to the second virtual line LY and on the negative direction side of the second direction Y with respect to the first virtual line LX.

The scanning unit 100 starts scanning of each frame of the scanning range SA from the first corner CR1 or the second corner CR2. For example, in a case where scanning is started from the first corner CR1, the reflecting surface 102 is rotated in the positive direction of the first direction X around the yaw axis 102y, and scanning is performed on a segment between the first corner CR1 and the second corner CR2 within the scanning range SA. After the scanning of the segment between the first corner CR1 and the second corner CR2 within the scanning range SA is completed, the reflecting surface 102 is rotated in the negative direction of the second direction Y around the pitch axis 102p, and then, the reflecting surface 102 is rotated around the yaw axis 102y, and a segment located on the negative direction side of the second direction Y with respect to the previously scanned segment is scanned. In this manner, the scanning unit 100 repeats scanning of a plurality of segments arranged in the second direction Y within the scanning range SA. A rotation direction of the yaw axis 102y when scanning a certain segment within the scanning range SA, and a rotation direction of the yaw axis 102y when scanning another segment adjacent to the certain segment in the second direction Y within the scanning range SA may be the same or opposite. At the final stage of each frame of the scanning range SA, the scanning unit 100 scans a segment between the third corner CR3 and the fourth corner CR4 within the scanning range SA. As a result, the scanning unit 100 completes scanning of each frame of the scanning range SA at the third corner CR3 or the fourth corner CR4.

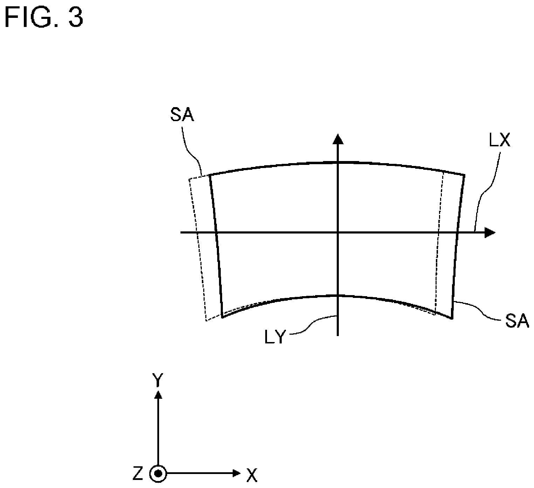

Fig. 3 is a diagram illustrating a first example of the positional deviation of the scanning unit 100 from the reference position.

In Fig. 3, the scanning range SA indicated by a solid line indicates a scanning range projected onto the virtual plane perpendicular to the third direction Z in a case where the position of the scanning unit 100 is located at the reference position. The scanning range SA indicated by a dashed line is a scanning range projected onto the virtual plane perpendicular to the third direction Z in a case where the scanning unit 100 is rotated in the negative direction of the first direction X around the yaw axis 102y as compared with a case where the position of the scanning unit 100 is located at the reference position. As shown in Fig. 3, the scanning range SA in a case where the scanning unit 100 is rotated in the negative direction of the first direction X around the yaw axis 102y as compared with a case where the position of the scanning unit 100 is located at the reference position not only moves from the scanning range SA in a case where the position of the scanning unit 100 is located at the reference position but also deforms.

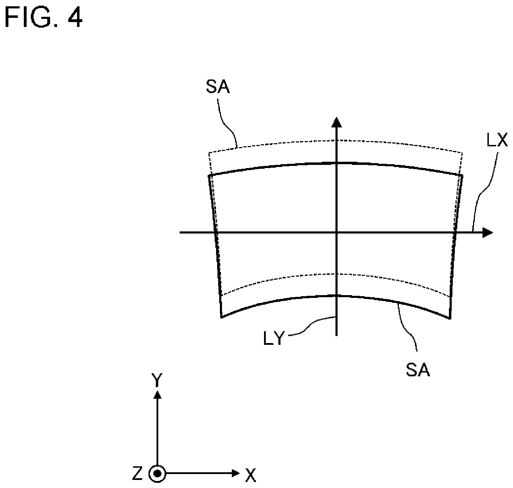

Fig. 4 is a diagram illustrating a second example of the positional deviation of the scanning unit 100 from the reference position.

In Fig. 4, the scanning range SA indicated by a solid line indicates a scanning range projected onto the virtual plane perpendicular to the third direction Z in a case where the position of the scanning unit 100 is located at the reference position. The scanning range SA indicated by a dashed line indicates a scanning range projected onto the virtual plane perpendicular to the third direction Z in a case where the scanning unit 100 is rotated in the positive direction of the second direction Y around the pitch axis 102p as compared with a case where the position of the scanning unit 100 is located at the reference position. As shown in Fig. 4, the scanning range SA in a case where the scanning unit 100 is rotated in the positive direction of the second direction Y around the pitch axis 102p as compared with a case where the position of the scanning unit 100 is located at the reference position not only moves from the scanning range SA in a case where the position of the scanning unit 100 is located at the reference position but also deforms.

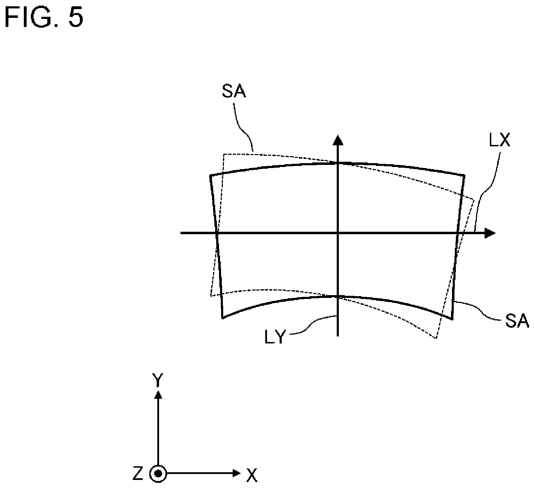

Fig. 5 is a diagram illustrating a third example of the positional deviation of the scanning unit 100 from the reference position.

In Fig. 5, the scanning range SA indicated by a solid line indicates a scanning range projected onto the virtual plane perpendicular to the third direction Z in a case where the position of the scanning unit 100 is located at the reference position. The scanning range SA indicated by a dashed line indicates a scanning range projected onto the virtual plane perpendicular to the third direction Z in a case where the scanning unit 100 is rotated clockwise around the roll axis 102r when viewed from the positive direction of the third direction Z as compared with a case where the position of the scanning unit 100 is located at the reference position. As shown in Fig. 5, the scanning range SA in a case where the scanning unit 100 is rotated clockwise around the roll axis 102r when viewed from the positive direction of the third direction Z as compared with a case where the position of the scanning unit 100 is located at the reference position not only moves from the scanning range SA in a case where the position of the scanning unit 100 is located at the reference position but also deforms.

Return to Figs. 1 and 2.

In the present embodiment, four reflecting units 200 are located at the four corners of the scanning range SA, that is, the first corner CR1, the second corner CR2, the third corner CR3, and the fourth corner CR4. Each reflecting unit 200 reflects at least a part of the spot S. The sensor device 10 may further include other reflecting units 200 in addition to the four reflecting units 200 shown in Figs. 1 and 2.

The measuring unit 310 measures the positional deviation of the scanning unit 100 from the reference position using a relationship between a reflection amount A1 of the spot S reflected by the reflecting unit 200 provided at the first corner CR1, a reflection amount A2 of the spot S reflected by the reflecting unit 200 provided at the second corner CR2, a reflection amount A3 of the spot S reflected by the reflecting unit 200 provided at the third corner CR3, and a reflection amount A4 of the spot S reflected by the reflecting unit 200 provided at the fourth corner CR4.

First, the measuring unit 310 uses the comparison result of the sum of A1 and A3 and the sum of A2 and A4 to measure the positional deviation of the scanning unit 100 from the reference position due to the rotation of the reflecting surface 102 around the yaw axis 102y. For example, in a case where the position of the scanning unit 100 is located at the reference position, a ratio $\{(A1 + A3) - (A2 + A4)\} / \{(A1 + A3) + (A2 + A4)\}$ is assumed to be a known reference value. In this case, when the above-described ratio is greater than the above-described reference value, the measuring unit 310 can measure that the scanning range SA is deviated in the negative direction of the first direction X as compared with a case where the position of the scanning unit 100 is located at the reference position. On the other hand, when the above-described ratio is smaller than the above-described reference value, the measuring unit 310 can measure that the scanning range SA is deviated in the positive direction of the first direction X as compared with a case where the position of the scanning unit 100 is located at the reference position. In particular, in a case where the plurality of reflecting units 200 are provided such that the above-described reference value is zero, it is possible to easily determine whether the above-described ratio is greater or smaller than the above-described reference value based only on the positive or negative value of the above-described ratio, as compared with a case where the above-described reference value is a value other than zero. From this viewpoint, the above-described reference value is preferably zero. The above-described reference value may be a value other than zero.

Second, the measuring unit 310 uses the comparison result of the sum of A1 and A2 and the sum of A3 and A4 to measure the positional deviation of the scanning unit 100 from the reference position due to the rotation of the reflecting surface 102 around the pitch axis 102p. For example, in a case where the position of the scanning unit 100 is located at the reference position, a ratio $\{(A1 + A2) - (A3 + A4)\} / \{(A1 + A2) + (A3 + A4)\}$ is assumed to be a known reference value. In this case, when the above-described ratio is greater than the above-described reference value, the measuring unit 310 can measure that the scanning range SA is deviated in the positive direction of the second direction Y as compared with a case where the position of the scanning unit 100 is located at the reference position. On the other hand, when the above-described ratio is smaller than the above-described reference value, the measuring unit 310 can measure that the scanning range SA is deviated in the negative direction of the second direction Y as compared with a case where the position of the scanning unit 100 is located at the reference position. In particular, in a case where the plurality of reflecting units 200 are provided such that the above-described reference value is zero, it is possible to easily determine whether the above-described ratio is greater or smaller than the above-described reference value based only on the positive or negative value of the above-described ratio, as compared with a case where the above-described reference value is a value other than zero. From this viewpoint, the above-described reference value is preferably zero. The above-described reference value may be a value other than zero.

Third, the measuring unit 310 uses the comparison result of the relative value of A1 to A3 and the relative value of A4 to A2 to measure the positional deviation of the scanning unit 100 from the reference position due to the rotation of the reflecting surface 102 around the roll axis 102r. For example, in a case where the position of the scanning unit 100 is located at the reference position, a ratio $(A1 - A3) / (A1 + A3) + (A4 - A2) / (A4 + A2)$ is assumed to be a known reference value. In this case, when the above-described ratio is greater than the above-described reference value, the measuring unit 310 can measure that the scanning range SA is rotated counterclockwise when viewed from the positive direction of the third direction Z as compared with a case where the position of the scanning unit 100 is located at the reference position. On the other hand, when the above-described ratio is smaller than the above-described reference value, the measuring unit 310 can measure that the scanning range SA is rotated clockwise when viewed from the positive direction of the third direction Z as compared with a case where the position of the scanning unit 100 is located at the reference position. In particular, in a case where the plurality of reflecting units 200 are provided such that the above-described reference value is zero, it is possible to easily determine whether the above-described ratio is greater or smaller than the above-described reference value based only on the positive or negative value of the above-described ratio, as compared with a case where the above-described reference value is a value other than zero. From this viewpoint, the above-described reference value is preferably zero. The above-described reference value may be a value other than zero.

In the example shown in Fig. 2, the scanning start position of the scanning range SA of the scanning unit 100 is the first corner CR1 or the second corner CR2, and the scanning end position of the scanning range SA of the scanning unit 100 is the third corner CR3 or fourth corner CR4. Therefore, two of the four reflecting units 200 located at the first corner CR1, the second corner CR2, the third corner CR3, and the fourth corner CR4 reflect at least a part of spots S different from the spot S emitted to the scanning start position of the scanning range SA of the scanning unit 100 and from the spot S emitted to the scanning end position of the scanning range SA of the scanning unit 100. For example, if the scanning start position and the scanning end position of the scanning range SA of the scanning unit 100 are the first corner CR1 and the third corner CR3, respectively, and the reflecting units 200 are located at only two locations, that is, the first corner CR1 and the third corner CR3, the spots S may not be emitted to the two reflecting units 200 located at the first corner CR1 and the third corner CR3 when the scanning range SA is deviated by a relatively large distance in the positive direction of the first direction X as compared with a case where the position of the scanning unit 100 is located at the reference position. On the other hand, in the example shown in Fig. 2, even when the scanning range SA is deviated by a relatively large distance as compared with a case where the position of the scanning unit 100 is located at the reference position, at least a part of the spot S can be emitted to at least one of the four reflecting units 200.

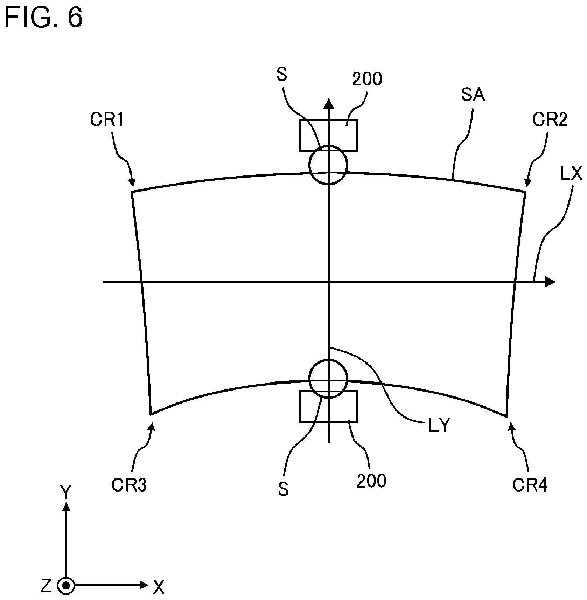

Fig. 6 is a diagram showing a first modification example of Fig. 2. The modification example shown in Fig. 6 is similar to the embodiment shown in Fig. 2 except for the following points.

In the modification example shown in Fig. 6, two reflecting units 200 are located on both sides of the scanning range SA in the second direction Y. In addition, the two reflecting units 200 are located on the second virtual line LY. The sensor device 10 may further include another reflecting unit 200 in addition to the two reflecting units 200 shown in Fig. 6.

The measuring unit 310 uses the comparison result between a reflection amount A5 of the spot S reflected by the reflecting unit 200 located on the positive direction side of the second direction Y with respect to the first virtual line LX and a reflection amount A6 of the spot S reflected by the reflecting unit 200 located on the negative direction side of the second direction Y with respect to the first virtual line LX to measure the positional deviation of the scanning unit 100 from the reference position due to the rotation of the reflecting surface 102 around the pitch axis 102p. For example, in a case where the position of the scanning unit 100 is located at the reference position, a ratio $(A5 - A6) / (A5 + A6)$ is assumed to be a known reference value. In this case, when the above-described ratio is greater than the above-described reference value, the measuring unit 310 can measure that the scanning range SA is deviated in the positive direction of the second direction Y as compared with a case where the position of the scanning unit 100 is located at the reference position. On the other hand, when the above-described ratio is smaller than the above-described reference value, the measuring unit 310 can measure that the scanning range SA is deviated in the negative direction of the second direction Y as compared with a case where the position of the scanning unit 100 is located at the reference position. In particular, in a case where the plurality of reflecting units 200 are provided such that the above-described reference value is zero, it is possible to easily determine whether the above-described ratio is greater or smaller than the above-described reference value based only on the positive or negative value of the above-described ratio, as compared with a case where the above-described reference value is a value other than zero. From this viewpoint, the above-described reference value is preferably zero. The above-described reference value may be a value other than zero.

In the example shown in Fig. 6, the scanning start position of the scanning range SA of the scanning unit 100 is the first corner CR1 or the second corner CR2, and the scanning end position of the scanning range SA of the scanning unit 100 is the third corner CR3 or fourth corner CR4. Therefore, the two reflecting units 200 reflect at least a part of spots S different from the spot S emitted to the scanning start position of the scanning range SA of the scanning unit 100 and from the spot S emitted to the scanning end position of the scanning range SA of the scanning unit 100. For example, if the scanning start position and the scanning end position of the scanning range SA of the scanning unit 100 are the first corner CR1 and the third corner CR3, respectively, and two reflecting units 200 are located at the first corner CR1 and the third corner CR3, the spots S may not be emitted to the two reflecting units 200 located at the first corner CR1 and the third corner CR3 when the scanning range SA is deviated by a relatively large distance in the positive direction of the first direction X as compared with a case where the position of the scanning unit 100 is located at the reference position. On the other hand, in the example shown in Fig. 6, even when the scanning range SA is deviated in the first direction X by a relatively large distance as compared with a case where the position of the scanning unit 100 is located at the reference position, at least a part of the spots S can be emitted to both the two reflecting units 200.

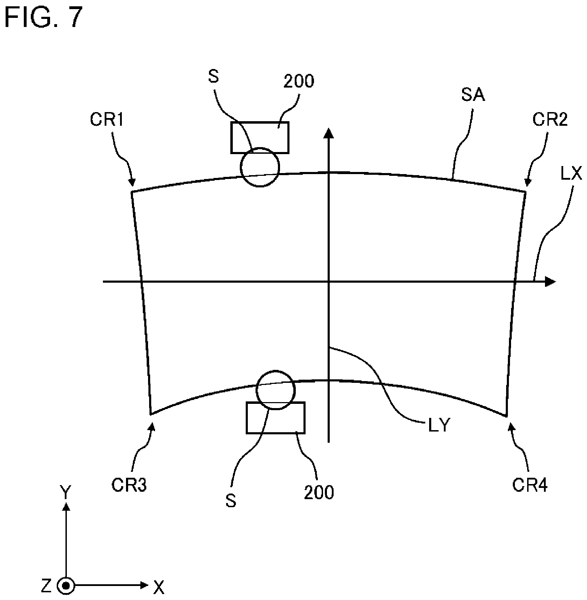

Fig. 7 is a diagram showing a second modification example of Fig. 2. The modification example shown in Fig. 7 is similar to the modification example shown in Fig. 6 except for the following points.

In the modification example shown in Fig. 7, two reflecting units 200 are shifted to the negative direction side of the first direction X with respect to the second virtual line LY. The two reflecting units 200 may be shifted to the positive direction side of the first direction X with respect to the second virtual line LY. In the modification example shown in Fig. 7 as well, the measuring unit 310 can measure the positional deviation of the scanning unit 100 from the reference position due to the rotation of the reflecting surface 102 around the pitch axis 102p, in the same manner as in the modification example shown in Fig. 6. In addition, in the same manner as in the modification example shown in Fig. 6, at least a part of the spots S can be emitted to both the two reflecting units 200 even when the scanning range SA is deviated in the first direction X by a relatively large distance as compared with a case where the position of the scanning unit 100 is located at the reference position.

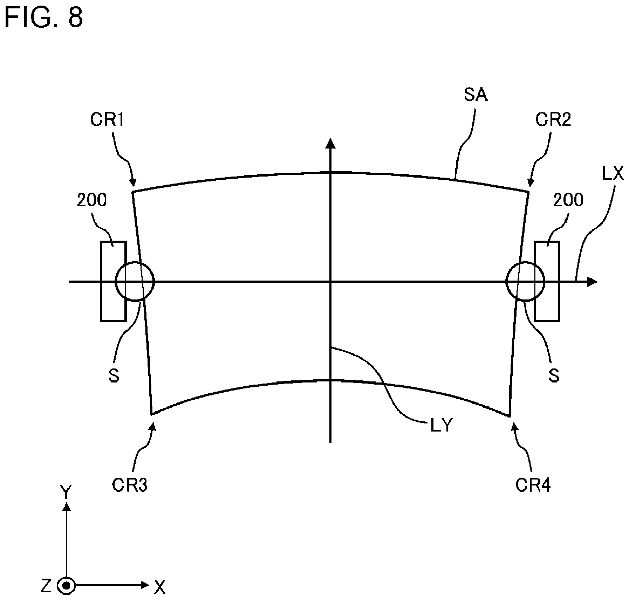

Fig. 8 is a diagram showing a third modification example of Fig. 2. The modification example shown in Fig. 8 is similar to the embodiment shown in Fig. 2 except for the following points.

In the modification example shown in Fig. 8, two reflecting units 200 are located on both sides of the scanning range SA in the first direction X. In addition, the two reflecting units 200 are located on the first virtual line LX. The sensor device 10 may further include another reflecting unit 200 in addition to the two reflecting units 200 shown in Fig. 8.

The measuring unit 310 uses the comparison result between a reflection amount A7 of the spot S reflected by the reflecting unit 200 located on the positive direction side of the first direction X with respect to the second virtual line LY and a reflection amount A8 of the spot S reflected by the reflecting unit 200 located on the negative direction side of the first direction X with respect to the second virtual line LY to measure the positional deviation of the scanning unit 100 from the reference position due to the rotation of the reflecting surface 102 around the yaw axis 102y. For example, in a case where the position of the scanning unit 100 is located at the reference position, a ratio (A7 - A8) / (A7 + A8) is assumed to be a known reference value. In this case, when the above-described ratio is greater than the above-described reference value, the measuring unit 310 can measure that the scanning range SA is deviated in the positive direction of the first direction X as compared with a case where the position of the scanning unit 100 is located at the reference position. On the other hand, when the above-described ratio is smaller than the above-described reference value, the measuring unit 310 can measure that the scanning range SA is deviated in the negative direction of the first direction X as compared with a case where the position of the scanning unit 100 is located at the reference position. In particular, in a case where the plurality of reflecting units 200 are provided such that the above-described reference value is zero, it is possible to easily determine whether the above-described ratio is greater or smaller than the above-described reference value based only on the positive or negative value of the above-described ratio, as compared with a case where the above-described reference value is a value other than zero. From this viewpoint, the above-described reference value is preferably zero. The above-described reference value may be a value other than zero.

In the example shown in Fig. 8, the scanning start position of the scanning range SA of the scanning unit 100 is the first corner CR1 or the second corner CR2, and the scanning end position of the scanning range SA of the scanning unit 100 is the third corner CR3 or the fourth corner CR4. Therefore, the two reflecting units 200 reflect at least a part of spots S different from the spot S emitted to the scanning start position of the scanning range SA of the scanning unit 100 and from the spot S emitted to the scanning end position of the scanning range SA of the scanning unit 100. If the two reflecting units 200 are located at the scanning start position and the scanning end position of the scanning range SA of the scanning unit 100, the spot S may not be emitted to at least one of the two reflecting units 200 when the scanning range SA is deviated in the second direction Y by a relatively large distance as compared with a case where the position of the scanning unit 100 is located at the reference position. On the other hand, in the example shown in Fig. 6, even when the scanning range SA is deviated in the second direction Y by a relatively large distance as compared with a case where the position of the scanning unit 100 is located at the reference position, at least a part of the spots S can be emitted to both the two reflecting units 200.

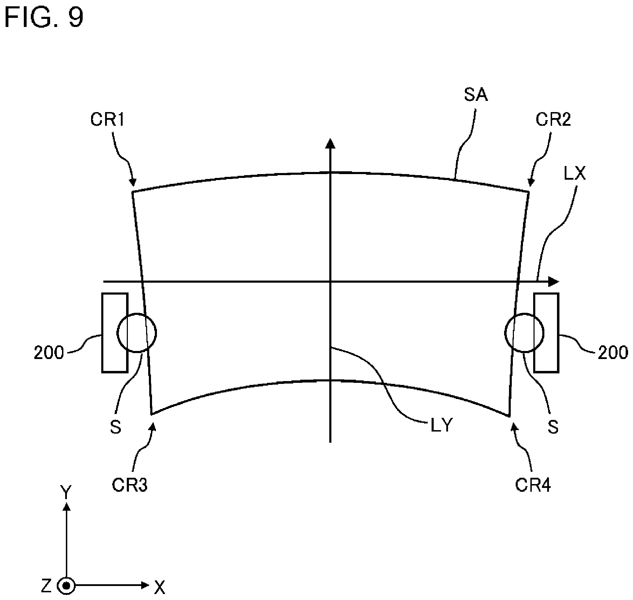

Fig. 9 is a diagram showing a fourth modification example of Fig. 2. The modification example shown in Fig. 9 is similar to the modification example shown in Fig. 8 except for the following points.

In the modification example shown in Fig. 9, two reflecting units 200 are shifted to the negative direction side of the second direction Y with respect to the first virtual line LX. The two reflecting units 200 may be shifted to the positive direction side of the second direction Y with respect to the first virtual line LX. In the modification example shown in Fig. 9 as well, the measuring unit 310 can measure the positional deviation of the scanning unit 100 from the reference position due to the rotation of the reflecting surface 102 around the yaw axis 102y, in the same manner as in the modification example shown in Fig. 8. In addition, in the same manner as in the modification example shown in Fig. 8, at least a part of the spots S can be emitted to both the two reflecting units 200 even when the scanning range SA is deviated in the second direction Y by a relatively large distance as compared with a case where the position of the scanning unit 100 is located at the reference position.

Returning to Fig. 1, the correcting unit 320 will be described.

The correcting unit 320 corrects data indicating a measurement direction of the scanning unit 100 according to the positional deviation of the scanning unit 100 from the reference position.

Assume that the position of the scanning unit 100 is located at the reference position. In this case, in a case where the reflecting surface 102 is in a stationary state, a unit normal vector of the reflecting surface 102 is denoted by $n_0$, a unit direction vector of a direction parallel to the yaw axis 102y is denoted by $n_y$, and a unit direction vector of a direction parallel to the pitch axis 102p is denoted by $n_p$. In a case where the reflecting surface 102 is rotated around the yaw axis 102y by an angle $\theta_{y,1}$ and is rotated around the pitch axis 102p by an angle $\theta_{p,1}$, from the stationary state, a normal vector $n_1$ of the reflecting surface 102 is represented by Equation (1).

[Equation 1]

$$n_1 = n_p(n_p \cdot k_1) + [k_1 - n_p(n_p \cdot k_1)] \cos\theta_{p,1} - (k_1 \times n_p) \sin\theta_{p,1} \qquad (1)$$

Here, a vector $k_1$ is represented by Equation (2).

[Equation 2]

$$k_1 = n_y(n_y \cdot n_0) + [n_0 - n_y(n_y \cdot n_0)] \cos\theta_{y,1} - (n_0 \times n_y) \sin\theta_{y,1} \qquad (2)$$

The vector $k_1$ indicates a normal vector of the reflecting surface 102 in a case where the reflecting surface 102 is rotated around the yaw axis 102y by the angle $\theta_{y,1}$ from the stationary state without being rotated around the pitch axis 102p.

When a beam with a direction vector r is incident on the reflecting surface 102 whose normal vector is the normal vector $n_1$ shown in Equation (1), the direction vector of the beam reflected by the reflecting surface 102, that is, a direction vector $m_1$ of the measurement direction of the scanning unit 100, is represented by Equation (3).
[Equation 3]

$$m_1 = r - 2(r \cdot n_1)n_1 \quad (3)$$

Assume that the reflecting surface 102 is rotated around the roll axis 102r by an angle $\Delta\theta_r$, around the yaw axis 102y by an angle $\Delta\theta_y$, and around the pitch axis 102p by an angle $\Delta\theta_p$ in the order of the roll axis 102r, the yaw axis 102y, and the pitch axis 102p as compared with a case where the position of the scanning unit 100 is located at the reference position. Hereinafter, the phrase "the reflecting surface 102 is located at a rotational deviation position" is used to describe a case where the reflecting surface 102 is rotated around the roll axis 102r by the angle $\Delta\theta_r$, around the yaw axis 102y by the angle $\Delta\theta_y$, and around the pitch axis 102p by the angle $\Delta\theta_p$ in the order of the roll axis 102r, the yaw axis 102y, and the pitch axis 102p as compared with a case where the position of the scanning unit 100 is located at the reference position, as necessary.

A unit normal vector $n_0'$ of the reflecting surface 102 in a case where the reflecting surface 102 is located at the rotational deviation position and in a stationary state, a unit direction vector $n_y'$ of the direction parallel to the yaw axis, a unit direction vector $n_p'$ of the direction parallel to the pitch axis are calculated by rotating the vector $n_0$, the vector $n_y$, the vector $n_p$ around the roll axis 102r by the angle $\Delta\theta_r$, around the yaw axis 102y by the angle $\Delta\theta_y$, and around the pitch axis 102p by the angle $\Delta\theta_p$ in the order of the roll axis 102r, the yaw axis 102y, and the pitch axis 102p, respectively.

By substituting the vector $n_0$, the vector $n_y$ and the vector $n_p$ in Equation (1), Equation (2), and Equation (3) with the vector $n_0'$, the vector $n_y'$ and the vector $n_p'$, respectively, the direction vector m' of the measurement direction of the scanning unit 100 in a case where the reflecting surface 102 is located at the rotational deviation position can be calculated.

If the direction vector m is not substituted with the direction vector m' in the data indicating the measurement direction of the scanning unit 100 even though the reflecting surface 102 is located at the rotational deviation position, the sensor device 10 may erroneously detect an object present in the direction of the direction vector m' as an object present in the direction of the direction vector m. In contrast, in the embodiment, the correcting unit 320 corrects the data indicating the measurement direction of the scanning unit 100 from the direction vector m to the direction vector m'. This makes it possible for the sensor device 10 to accurately detect the direction in which the object is present. In addition, in a case where the data indicating the measurement direction of the scanning unit 100 is corrected by the correcting unit 320, high-precision adjustment for providing the scanning unit 100 at the reference position is not required when the scanning unit 100 is assembled to the sensor device 10. In this case, it is possible to reduce the cost when assembling the scanning unit 100 to the sensor device 10 as compared with a case where high-precision adjustment is required.

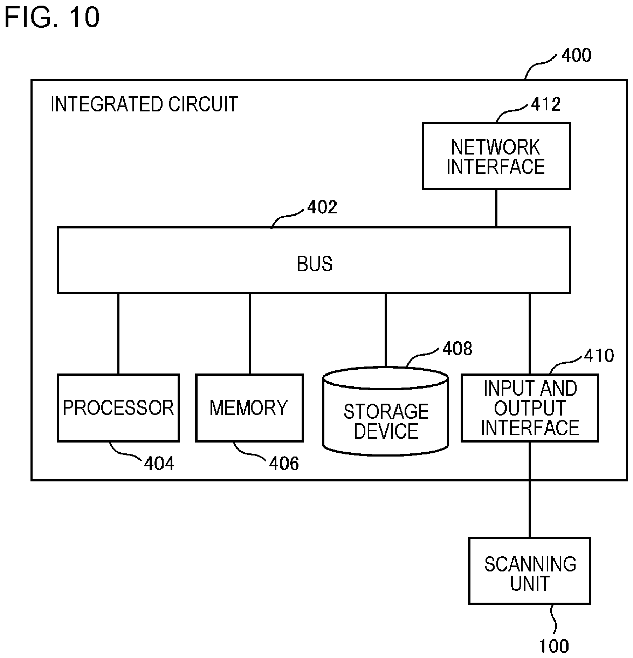

Fig. 10 is a diagram illustrating the hardware configuration of the measuring unit 310 and the correcting unit 320. The measuring unit 310 and the correcting unit 320 are implemented using an integrated circuit 400. The integrated circuit 400 is, for example, a system-on-a-chip (SoC).

The integrated circuit 400 includes a bus 402, a processor 404, a memory 406, a storage device 408, an input and output interface 410, and a network interface 412. The bus 402 is a data transmission path for the processor 404, the memory 406, the storage device 408, the input and output interface 410, and the network interface 412 to transmit and receive data to and from each other. However, a method of mutually connecting the processor 404, the memory 406, the storage device 408, the input and output interface 410, and the network interface 412 is not limited to bus connection. The processor 404 is an arithmetic processing device implemented using a microprocessor or the like. The memory 406 is a memory implemented using a random access memory (RAM) or the like. The storage device 408 is a storage device implemented using a read only memory (ROM), a flash memory, or the like.

The input and output interface 410 is an interface for connecting the integrated circuit 400 to peripheral devices. The scanning unit 100 is connected to the input and output interface 410.

The network interface 412 is an interface for connecting the integrated circuit 400 to a network. This network is a network such as a controller area network (CAN), for example. A method for the connection of the network interface 412 to the network may be a wireless connection or a wired connection.

The storage device 408 stores a program module for implementing the function of the measuring unit 310 and a program module for implementing the function of the correcting unit 320. The processor 404 reads out and executes these program modules on the memory 406, thereby implementing the function of each of the measuring unit 310 and the correcting unit 320.

The hardware configuration of the integrated circuit 400 is not limited to the configuration shown in Fig. 10. For example, the program module may be stored in the memory 406. In this case, the integrated circuit 400 may not include the storage device 408.

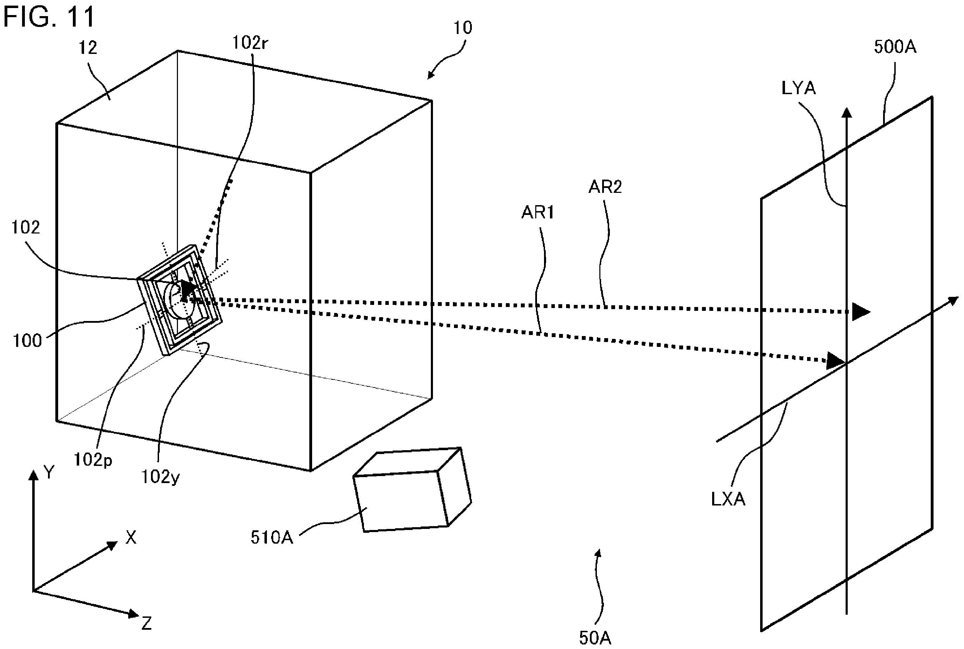

Fig. 11 is a diagram illustrating a first example of a measuring system 50A that measures the positional deviation of the scanning unit 100 from the reference position.

The measuring system 50A includes a screen 500A and an imaging unit 510A. The screen 500A is a plane perpendicular to the third direction Z. For the explanatory purpose, the measuring system 50A shows a first virtual line LXA and a second virtual line LYA. The first virtual line LXA is a virtual line that passes through the center of the screen 500A and that is parallel to the first direction X. The second virtual line LYA is a virtual line that passes through the center of the screen 500A and that is parallel to the second direction Y.

The imaging unit 510A images a beam spot generated by projecting a beam emitted by the scanning unit 100 onto the screen 500A. The measuring system 50A measures the positional deviation of the scanning unit 100 from the reference position using an imaging result of the imaging unit 510A.

The measurement of the positional deviation of the scanning unit 100 from the reference position due to the rotation of the scanning unit 100 around at least one of the pitch axis 102p and the yaw axis 102y will be described. Assume that the scanning unit 100 is in a stationary state. In this case, when the position of the scanning unit 100 is located at the reference position, a beam emitted from the light source such as a laser (not shown) is incident on the reflecting surface 102 as indicated by a dashed arrow extending toward the reflecting surface 102 in Fig. 11. It is assumed that the beam incident on the reflecting surface 102 is, as indicated by a first dashed arrow AR1 extending from the reflecting surface 102 toward an intersection of the first virtual line LXA and the second virtual line LYA on the screen 500A in Fig. 11, projected onto the center of the screen 500A, that is, the intersection of the first virtual line LXA and the second virtual line LYA on the screen 500A, by the scanning unit 100. In a case where the scanning unit 100 is in a stationary state and the position of the scanning unit 100 is deviated from the reference position by the rotation of the reflecting surface 102 around at least one of the pitch axis 102p and the yaw axis 102y, the beam projected onto the screen 500A by the scanning unit 100 is deviated from the center of the screen 500A, for example, as indicated by a second dashed arrow AR2 extending from the reflecting surface 102 toward a position deviated to the positive direction of the first direction X and the positive direction of the second direction Y with respect to the intersection of the first virtual line LXA and the second virtual line LYA on the screen 500A, in Fig. 11. The imaging unit 510A images the beam spot projected onto the position deviated from the center of the screen 500A. The measuring system 50A can measure the positional deviation of the scanning unit 100 from the reference position due to the rotation of the reflecting surface 102 around at least one of the pitch axis 102p and the yaw axis 102y by using the imaging result of the imaging unit 510A.

The measurement of the positional deviation of the scanning unit 100 from the reference position due to the rotation of the scanning unit 100 around the roll axis 102r will be described. Assume that the reflecting surface 102 is rotated around the pitch axis 102p without being rotated around the yaw axis 102y. In this case, when the position of the scanning unit 100 is located at the reference position, a beam incident on the reflecting surface 102 from the light source such as a laser (not shown) is projected onto the second virtual line LYA by the scanning unit 100. Similarly, assume that the reflecting surface 102 is rotated around the pitch axis 102p without being rotated around the yaw axis 102y. In this case, in a case where the position of the scanning unit 100 is deviated from the reference position by the rotation of the scanning unit 100 around the roll axis 102r, the trajectory of the beam spot projected onto the screen 500A by the scanning unit 100 is tilted with respect to the second virtual line LYA. The imaging unit 510A images the trajectory of the beam spot tilted from the second virtual line LYA. The measuring system 50A can measure the positional deviation of the scanning unit 100 from the reference position due to the rotation of the reflecting surface 102 around the roll axis 102r by using the imaging result of the imaging unit 510A.

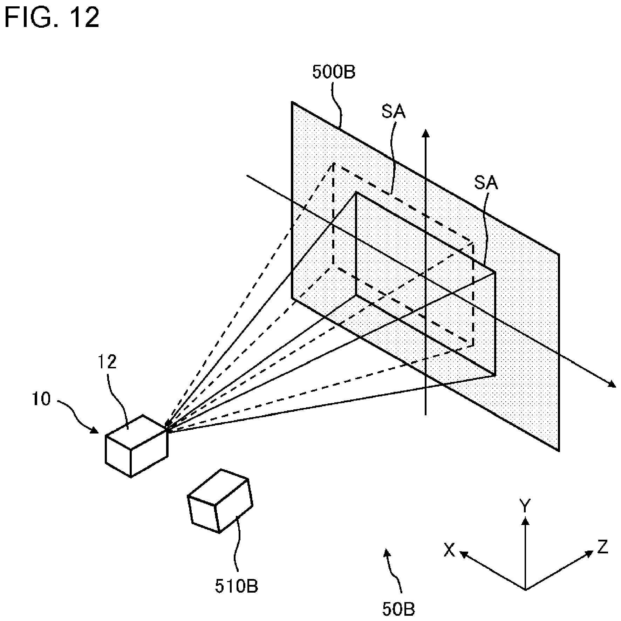

Fig. 12 is a diagram illustrating a second example of a measuring system 50B that measures the positional deviation of the scanning unit 100 from the reference position.

In Fig. 12, the scanning range SA indicated by solid lines indicates a scanning range projected onto a screen 500B by the scanning unit 100 in a case where the position of the scanning unit 100 is located at the reference position. In addition, the scanning range SA indicated by dashed lines indicates a scanning range projected onto the screen 500B by the scanning unit 100 in a case where the position of the scanning unit 100 is deviated from the reference position. The screen 500B is a plane perpendicular to the third direction Z.

An imaging unit 510B images the scanning range SA projected onto the screen 500B by the scanning unit 100. The measuring system 50B measures the positional deviation of the scanning unit 100 from the reference position using an imaging result of the imaging unit 510B. Specifically, the measuring system 50B can measure the positional deviation of the scanning unit 100 from the reference position by comparing the scanning range SA projected onto the screen 500B by the scanning unit 100 in a case where the position of the scanning unit 100 is located at the reference position and the scanning range SA projected onto the screen 500B by the scanning unit 100 in a case where the position of the scanning unit 100 is deviated from the reference position, from the imaging result of the imaging unit 510B. In a case where the imaging unit 510B images the scanning range SA projected onto the screen 500B, the sensor device 10 may emit a pulsed beam over the entire scanning range SA on the screen 500B, or emit a pulsed beam only to a partial range of the scanning range SA on the screen 500B.

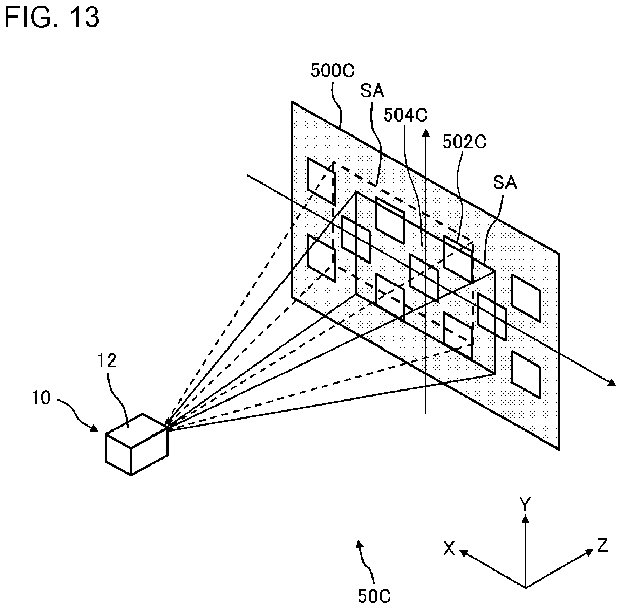

Fig. 13 is a diagram illustrating a third example of a measuring system 50C that measures the positional deviation of the scanning unit 100 from the reference position.

In Fig. 13, the scanning range SA indicated by solid lines indicates a scanning range projected onto a screen 500C by the scanning unit 100 in a case where the position of the scanning unit 100 is located at the reference position. In addition, the scanning range SA indicated by dashed lines indicates a scanning range projected onto the screen 500C by the scanning unit 100 in a case where the position of the scanning unit 100 is deviated from the reference position. The screen 500C is a plane perpendicular to the third direction Z.

The screen 500C has first regions 502C and second regions 504C. The first regions 502C and the second regions 504C are regularly arranged in the first direction X and the second direction Y in at least a portion of the screen 500C. Specifically, the first regions 502C and the second regions 504C are arranged in a check pattern. The pattern of the first regions 502C and the second regions 504C are not limited to the example shown in Fig. 13.

The first region 502C and the second region 504C have different reflectance factors with respect to the beam with which scanning is performed by the scanning unit 100. For example, the second region 504C has a higher reflectance factor than that of the first region 502C with respect to the beam with which scanning is performed by the scanning unit 100. In addition, the second region 504C may be a retroreflector.

The sensor device 10 obtains point cloud data by scanning the screen 500C. In the point cloud data obtained by scanning the screen 500C, a distinctive pattern appears due to the difference in reflectance factor between the first region 502C and the second region 504C. Therefore, the sensor device 10 can determine which region of the screen 500C the scanning range SA has been projected onto by using the point cloud data obtained by scanning the screen 500C. The measuring system 50C can measure the positional deviation of the scanning unit 100 from the reference position by comparing the scanning range SA projected onto the screen 500C by the scanning unit 100 in a case where the position of the scanning unit 100 is located at the reference position and the scanning range SA projected onto the screen 500C by the scanning unit 100 in a case where the position of the scanning unit 100 is deviated from the reference position, from the detection result of the sensor device 10.

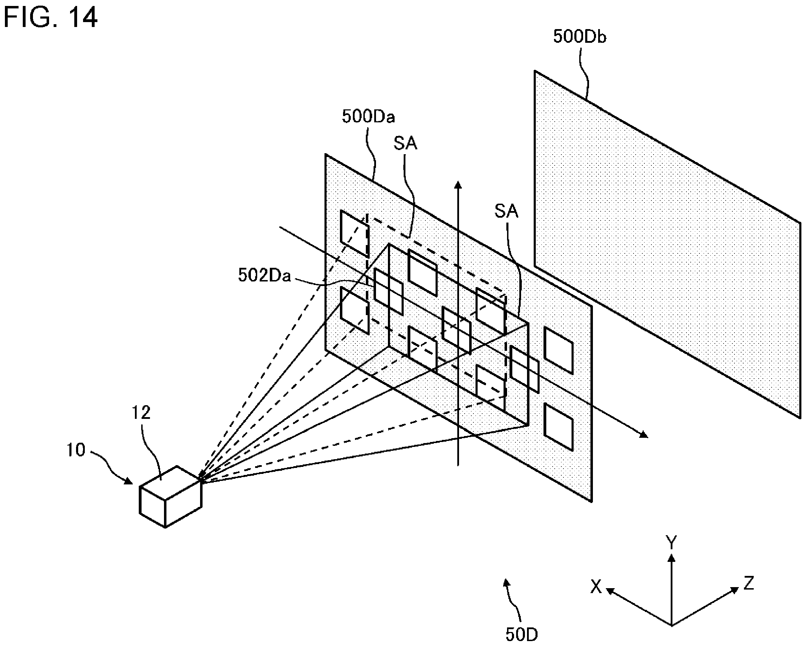

Fig. 14 is a diagram illustrating a fourth example of a measuring system 50D that measures the positional deviation of the scanning unit 100 from the reference position.

The measuring system 50D includes a first screen 500Da and a second screen 500Db. The first screen 500Da and the second screen 500Db are arranged in the third direction Z. The first screen 500Da is located closer to the sensor device 10 in the third direction Z than the second screen 500Db is.

In Fig. 14, the scanning range SA indicated by solid lines indicates a scanning range projected onto the first screen 500Da by the scanning unit 100 in a case where the position of the scanning unit 100 is located at the reference position. In addition, the scanning range SA indicated by dashed lines indicates a scanning range projected onto the first screen 500Da by the scanning unit 100 in a case where the position of the scanning unit 100 is deviated from the reference position. The first screen 500Da and the second screen 500Db are planes perpendicular to the third direction Z.

Through holes 502Da are provided in the first screen 500Da. The through holes 502Da are regularly arranged in the first direction X and the second direction Y in at least a portion of the first screen 500Da. Specifically, the through holes 502Da are arranged in a check pattern. The pattern of the through holes 502Da is not limited to the example shown in Fig. 14.

The sensor device 10 obtains point cloud data by scanning the first screen 500Da. The beam emitted toward the through hole 502Da passes through the through hole 502Da and is emitted to the second screen 500Db. Therefore, in the point cloud data obtained by scanning the first screen 500Da, measurement data of a region within the first screen 500Da where the through holes 502Da are provided is measurement data having a greater distance as compared with measurement data of a region within the first screen 500Da where the through holes 502Da are not provided. Accordingly, the sensor device 10 can determine which region of the first screen 500Da the scanning range SA has been projected onto by using the point cloud data obtained by scanning the first screen 500Da. The measuring system 50D can measure the positional deviation of the scanning unit 100 from the reference position by comparing the scanning range SA projected onto the first screen 500Da by the scanning unit 100 in a case where the position of the scanning unit 100 is located at the reference position and the scanning range SA projected onto the first screen 500Da by the scanning unit 100 in a case where the position of the scanning unit 100 is deviated from the reference position, from the detection result of the sensor device 10.

Although the embodiments of the present invention have been described above with reference to the drawings, these are examples of the present invention, and various configurations other than the above can also be employed.

This application claims priority based on Japanese Patent Application No. 2021-038050 filed on March 10, 2021, the entire disclosure of which is incorporated herein by reference.

REFERENCE SIGNS LIST

10 sensor device
12 housing
50A measuring system
50B measuring system
50C measuring system
50D measuring system
100 scanning unit
102 reflecting surface
102p pitch axis
102r roll axis
102y yaw axis
200 reflecting unit
310 measuring unit
320 correcting unit
400 integrated circuit
402 bus
404 processor
406 memory
408 storage device
410 input and output interface
412 network interface
500A screen
500B screen
500C screen
500Da first screen
500Db second screen
502C first region
502Da through hole
504C second region
510A imaging unit
510B imaging unit
AR1 first dashed arrow
AR2 second dashed arrow
CR1 first corner
CR2 second corner
CR3 third corner
CR4 fourth corner
LX first virtual line
LXA first virtual line
LY second virtual line
LYA second virtual line
S spot
SA scanning range
X first direction
Y second direction
Z third direction

**Claims**

1. A sensor device comprising:

a scanning unit; and
a plurality of reflecting units configured to reflect at least a part of a beam emitted to a scanning range of the scanning unit,
wherein the plurality of reflecting units are located at at least four corners of the scanning range.

2. A sensor device comprising:

a scanning unit; and
a plurality of reflecting units configured to reflect at least a part of a beam emitted to a scanning range of the scanning unit,
wherein the plurality of reflecting units are located on at least both sides of the scanning range, and
the plurality of reflecting units are configured to reflect at least a part of the beam different from the beam emitted to a scanning start position of the scanning range of the scanning unit and from the beam emitted to a scanning end position of the scanning range of the scanning unit.

3. The sensor device according to claim 1 or 2, further comprising:
a measuring unit configured to measure positional deviation of the scanning unit from a reference position using a relationship between reflection amounts of a plurality of the beams reflected by the plurality of reflecting units.

FIG. 1

10

| MEASURING UNIT | 310 |
| CORRECTING UNIT | 320 |

FIG. 2

FIG. 3

# FIG. 4

FIG. 5

FIG. 6

FIG. 7

FIG. 8

## FIG. 9

## FIG. 10

400

INTEGRATED CIRCUIT

412

NETWORK
INTERFACE

402

BUS

408

410

PROCESSOR

MEMORY

STORAGE
DEVICE

INPUT AND
OUTPUT
INTERFACE

404

406

SCANNING
UNIT

100

FIG. 11

500A
LYA
LXA
AR2
AR1
50A
10
510A
102r
102
100
102p
102y
12
X
Y
Z

## FIG. 12

# FIG. 13

FIG. 14

EP 4 306 992 A1

## INTERNATIONAL SEARCH REPORT

| International application No. |
| --- |
| **PCT/JP2022/009948** |

**A.    CLASSIFICATION OF SUBJECT MATTER**

*G01S 7/481*(2006.01)i; *G01S 7/497*(2006.01)i; *G02B 26/10*(2006.01)i
FI:    G01S7/481 Z; G01S7/497; G02B26/10 104Z

According to International Patent Classification (IPC) or to both national classification and IPC

**B.    FIELDS SEARCHED**

Minimum documentation searched (classification system followed by classification symbols)

G01S7/48 - G01S7/51, G01S17/00 - G01S17/95, G01C3/00 - G01C3/32, G01B11/00 - G01B11/30, G02B26/10 - G02B26/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2002-107452 A (NIPPON SIGNAL CO., LTD.) 10 April 2002 (2002-04-10) paragraphs [0023]-[0046], fig. 1-7 | 1 |
| X | JP 2010-44050 A (IHI CORP.) 25 February 2010 (2010-02-25) paragraphs [0017]-[0038], fig. 1-4 | 1 |
| X | JP 2000-75031 A (OMRON CORP.) 14 March 2000 (2000-03-14) paragraphs [0015]-[0017], [0040]-[0053], fig. 1, 5-7 | 2-3 |
| A | US 2015/0265853 A1 (REFLEX IMAGING LTD.) 24 September 2015 (2015-09-24) paragraphs [0041]-[0092], fig. 1-8 | 1-3 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **11 May 2022** | **24 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br><br>**PCT/JP2022/009948**</td></tr>
</table>

| Patent document<br>cited in search report | Publication date<br>(day/month/year) | Patent family member(s) | Publication date<br>(day/month/year) |
|---|---|---|---|
| JP    2002-107452    A | 10 April 2002 | (Family: none) | |
| JP    2010-44050    A | 25 February 2010 | (Family: none) | |
| JP    2000-75031    A | 14 March 2000 | (Family: none) | |
| US    2015/0265853    A1 | 24 September 2015 | GB        2505524      A<br><br>WO      2014/033425    A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020016481 A

- JP 2021038050 A